(19) Europäisches Patentamt
European Patent Office
Office européen des brevets

(11) **EP 2 037 448 A1**

(12) **EUROPÄISCHE PATENTANMELDUNG**

(43) Veröffentlichungstag:
**18.03.2009 Patentblatt 2009/12**

(51) Int Cl.:
*G10L 15/08* (2006.01)     *G10L 15/26* (2006.01)

(21) Anmeldenummer: **08105150.0**

(22) Anmeldetag: **27.08.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **14.09.2007 DE 102007043870**

(71) Anmelder: **Siemens Aktiengesellschaft**
**80333 München (DE)**

(72) Erfinder:
• **Andrassy, Bernt**
**80639 München (DE)**
• **Hofer, Joachim**
**81739 München (DE)**

(54) **Verfahren und Vorrichtung zur Klassifikation von Daten**

(57)     Bei einem Verfahren zum Klassifizieren von Daten (SDAT), insbesondere von Sprachdaten, in vorgegebene Klassen (CH, YM, YF, AM, AF, SM, SF), wobei in Abhängigkeit von Abweichungen (CE) zwischen tatsächlichen Klassenzugehörigkeiten (X) von Referenzdaten (RDAT) und einer Klassenzuordnung (Y) der Referenzdaten (RDAT), welche durch ein vorgegebenes Klassifizierungsverfahren erfolgt, für zu klassifizierende Daten (SDAT) wird eine mittels dem Klassifizierungsverfahren erzeugte Klassifizierungsverteilung (DIST) der zu klassifizierenden Daten (SDAT) auf die vorgegebenen Klassen (CH, YM, YF, AM, AF, SM, SF) zum Erzeugen einer optimierte Klassifizierungsverteilung (KDIST) korrigiert.

**FIG 1**

EP 2 037 448 A1

**Beschreibung**

Die vorliegende Erfindung betrifft ein Verfahren zum Klassifizieren von Daten, wie zum Beispiel Sprachdaten in vorgegebene Klassen. Ferner betrifft die Erfindung eine Klassifizierungsvorrichtung, welche geeignet ist ein entsprechendes Verfahren durchzuführen.

In vielfältigen Anwendungsszenarien ist es notwendig eine Mehrzahl von Datenproben in verschiedene Klassen einzuteilen, um anschließend über die Gesamtmenge der Datenproben statistische Aussagen treffen zu können. Es ist beispielsweise gewünscht, Anrufer, welche beispielsweise ein Call-Center erreichen, nach ihrem Alter oder Geschlecht zu klassifizieren. Dabei kann zum Beispiel das Sprachsignal ausgewertet werden und die Menge von Anrufern in eine Eigenschaftsverteilung eingeordnet werden. Eine gewünschte Angabe zur Altersverteilung kann beispielsweise Aussagen betreffen wie X% der Anrufer waren männliche Senioren und Y% weibliche Jugendliche.

Üblicherweise werden solche Daten zu Marktforschungszwecken erhoben indem Stichprobenuntersuchungen händisch, also von Menschen, analysiert werden. Dadurch kann dann eine Eigenschaftsverteilung von Anrufermengen ermittelt werden. Wünschenswert ist jedoch eine automatisierte Klassifizierung, die beispielsweise während eines Sprachdialogsystems bereits in Abhängigkeit von der Klassifizierung die Menüführung anpasst.

Problematisch ist dabei einerseits grundsätzlich die Klassifizierung, welche beispielsweise unterstützt durch eine Spracherkennung erfolgen kann, zuverlässig zu gestalten. Andererseits ist es zum Beispiel für Call-Center-Betreiber günstig, Aussagen über die Klassenverteilung in der Gesamtmenge von Anrufern zu erhalten. In der Regel sind entsprechende Klassifikatoren, also Einrichtungen die Klassifizierungsverfahren, insbesondere anhand von Sprachdatenproben durchführen, nur begrenzt zuverlässig. Das heißt üblicherweise werden Fehlzuordnungen auftreten, die die tatsächliche Verteilung, beispielsweise auf Altersklassen oder Geschlechtsklassen der Anrufer, verfälschen. Daher ist es besonders wichtig eine zuverlässige, die tatsächliche Klassenzuordnung der Anrufer abbildende Klassifizierungsverteilung bereitzustellen.

Vor diesem Hintergrund ist es eine Aufgabe der vorliegenden Erfindung, ein verbessertes Verfahren zum Klassifizieren von Daten zu schaffen, wobei insbesondere eine zuverlässige, möglichst den Realitäten entsprechende Klassifizierungsverteilung erstellt wird.

Diese Aufgabe wird durch ein Verfahren gemäß Patentanspruch 1 gelöst.

Demgemäß ist ein Verfahren zum Klassifizieren von Daten, insbesondere von Sprachdaten, in vorgegebene Klassen vorgesehen. Es werden Abweichungen zwischen tatsächlichen Klassenzugehörigkeiten von Referenzdaten und einer Klassenzuordnung der Referenzdaten, welche durch ein vorgegebenes Klassifizierungsverfahren erfolgt, bestimmt. Dabei wird in Abhängigkeit dieser Abweichungen eine für zu klassifizierende Daten mittels dem Klassifizierungsverfahren erzeugte Klassifizierungsverteilung der zu klassifizierenden Daten auf die vorgegebenen Klassen korrigiert, um eine optimierte Klassifizierungsverteilung zu erhalten.

Somit wird zunächst eine Art Training mittels Referenzdaten, die vorgegebene Klassenzuordnungen haben, durchgeführt. Das Klassifizierungsverfahren kann dabei ein standardisiertes Klassifizierungsverfahren sein, was beispielsweise anhand trainierter neuronaler Netze, die Klassen, wie zum Beispiel Alter oder Geschlecht eines Anrufers, erkennt und eine entsprechende Klassifizierungsverteilung erstellt. Indem die Fehlerabweichungen des Klassifizierungsergebnisses des Klassifizierungsverfahrens, wie beispielsweise durch einen Klassifikator implementiert, ermittelt werden, kann die Gesamtverteilung der unbekannten zu klassifizierenden Daten, wie sie von dem Klassifikator geliefert wird, optimiert werden. Ergeben sich beispielsweise systematische Abweichungen oder Vertauschungen zwischen Klassenzuordnungen durch den Klassifikator wird dies erfindungsgemäß bei der Erstellung der optimierten Klassifizierungsverteilung berücksichtigt.

Zum Beispiel kann eine Abbildung der tatsächlichen Klassenzugehörigkeiten auf die Klassenzuordnung der Referenzdaten, welche durch das vorgegebene Klassifizierungsverfahren erfolgt, als lineare Abbildung angenähert werden. Die zugehörige inverse Abbildung wird dann zum Erzeugen der optimierten Klassifizierungsverteilung auf die für die zu klassifizierenden Daten mittels dem Klassifizierungsverfahren erzeugten Klassifizierungsverteilung angewendet.

Durch die Analyse der Zuordnung durch das jeweilige Klassifizierungsverfahren der Referenzdaten wird daher eine Abbildung zumindest näherungsweise ermittelt. Diese Abbildung, welche beispielsweise als Matrix dargestellt werden kann, ist in der Regel invertierbar, sodass die optimierte Klassifizierungsverteilung durch Anwendung dieser invertierten Abbildung bzw. Matrix auf entsprechende Klassifizierungsvektoren ermittelt werden kann.

In einer Variante des Verfahrens erfolgt das Korrigieren der von dem vorgegebenen Klassifizierungsverfahren erzeugten Klassifizierungsverteilung für die zu klassifizierenden Daten in Abhängigkeit von ermittelten Häufigkeiten von Vertauschungen zwischen tatsächlichen Klassenzugehörigkeiten der Referenzdaten und durch das vorgegebene Klassifizierungsverfahren erfolgte Klassenzuordnungen der Referenzdaten. Ergibt sich nämlich eine systematische Vertauschung von zu klassifizierenden Datenproben durch das zugrunde gelegte Klassifizierungsverfahren wird dies erfindungsgemäß aus der sich ergebenden Verteilung heraus gerechnet, um damit eine optimierte Verteilung zu erhalten.

Vorzugsweise werden die folgenden Verfahrensschritte durchgeführt:

- Zuordnen von Referenzdatenproben aus Referenzdaten in vorgegebene Klassen mittels einem vorgegebenen Klassifizierungsverfahren, wobei jede Referenzdatenprobe einer vorgegebenen Klasse zugehörig ist;

- Bestimmen einer Abweichung der Anzahl einer jeweiligen vorgegebenen Klasse zugeordneten Referenzdatenproben von der Anzahl der der Klasse zugehörigen Referenzdatenproben für jede der vorgegebene Klassen;

- Zuordnen von Datenproben aus zu klassifizierenden Daten in die vorgegebenen Klassen mittels dem vorgegebenen Klassifizierungsverfahren zum Erzeugen einer Klassifizierungsverteilung; und

- Korrigieren der Klassifizierungsverteilung in Abhängigkeit von den bestimmten Abweichungen zum Erzeugen einer optimierten Klassifizierungsverteilung.

Als Referenzdatenproben kommen beispielsweise kommerzielle Datenbanken mit Sprachaufnahmen in Frage, die zum Beispiel bereits derart vorbearbeitet sind, dass realistische Verzerrungen, wie sie zum Beispiel beim Telefonieren erfolgen können, berücksichtigt werden. Als Abweichungen kommen beispielsweise die absoluten Differenzen oder Unterschiede zwischen den korrekten und fehlerhaften Zuordnungen auf die Klassen in Frage. Es können auch relative Anteile, also die prozentualen Verteilungsergebnisse und deren Differenzen zwischen fehlerhafter und korrekter Zuordnung ermittelt werden.

Insofern kann die Abweichung für eine Klasse als Differenz zwischen einem relativen Anteil der der Klasse zugehörigen Referenzdatenproben an der Gesamtzahl der Referenzdatenproben und einem relativen Anteil der der Klasse durch das vorgegebene Klassifizierungsverfahren zugeordneten Referenzdatenproben an der Gesamtzahl der zu klassifizierenden Referenzdatenproben ermittelt werden.

In einer Variante des Verfahrens liefert das jeweils vorgegebene Klassifizierungsverfahren ferner einen Konfidenzwert für eine Zuordnung einer Datenprobe oder einer Referenzdatenprobe zu einer der vorgegebenen Klassen. Dann wird die von dem Klassifizierungsverfahren erzeugte Klassifizierungsverteilung ferner in Abhängigkeit von den Konfidenzwerten korrigiert.

Die Konfidenzwerte können als a-posteriori Wahrscheinlichkeit für die korrekte Zuordnung verstanden werden. Je nach Implementierung des Klassifizierungsverfahrens werden entsprechende Merkmalslektoren bei jeder Datenproben bzw. jedem Anruf bzw. als zu klassifizierende Datenprobe, insbesondere Sprachproben von Anrufern, erzeugt.

Dabei können die vorgegebenen Klassen beispielsweise Anrufe von Kindern, Anrufe von jungen männlichen Erwachsenen, Anrufe von jungen weiblichen Erwachsenen, Anrufe von männlichen Erwachsenen, Anrufe von weiblichen Erwachsenen, Anrufe von männlichen Senioren und/oder Anrufe von weiblichen Senioren umfassen. Derartige Angaben oder Klassifizierungen von Anruferverteilungen sind insbesondere bei der Verbesserung von Sprachdialogsystemen oder der Schulung von Call-Center-Mitarbeitern nützlich.

Die Erfindung betrifft ferner eine Klassifizierungsvorrichtung zur Klassifizierung von Daten, welche geeignet ist ein vorbeschriebenes Verfahren zum Klassifizieren von Daten durchzuführen.

Vorzugsweise ist dabei eine Klassifizierungseinheit bzw. ein Klassifikator zur Durchführung eines vorgegebenen Klassifizierungsverfahrens vorgesehen. Ferner kann ein Referenzdatenspeicher und/oder ein Klassifizierungsdatenspeicher vorgesehen sein.

Die Klassifizierungsvorrichtung kann beispielsweise eine programmierbare Steuereinheit aufweisen, welche derart programmiert ist, dass ein wie zuvor beschriebenes Verfahren durchgeführt wird. Es ist zum Beispiel möglich, eine entsprechende Klassifizierungsvorrichtung computerimplementiert auszuführen, wobei die vorgenannte Klassifizierungseinheit und Steuereinheit als Teile oder Programmmodule eines Computerprogramms realisiert werden.

Schließlich betrifft die Erfindung ein Computerprogrammprodukt, welches die Durchführung eines entsprechenden Verfahrens zum Klassifizieren von Daten auf einer programmgesteuerten Rechnereinrichtung veranlasst. Als programmgesteuerte Rechnereinrichtung kommt zum Beispiel ein PC in Frage, auf dem entsprechende Software installiert ist und der Schnittstellen zum Entgegennehmen der zu klassifizierenden Daten aufweist. Das Computerprogrammprodukt kann beispielsweise in der Art eines Datenträgers, wie zum Beispiel USB-Stick, Floppy-Disk, CDROM, DVD, implementiert werden oder auch auf einer Servereinrichtung als herunterladbare Programmdatei implementiert sein.

Weitere vorteilhafte Ausgestaltungen der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Es zeigen dabei

Figur 1    ein schematisches Ablaufdiagramm einer Variante des Verfahrens zum Klassifizieren von Daten;

Figur 2    ein schematisches Blockdiagramm einer Klassifizierungsvorrichtung gemäß einer Ausführungsform der Erfindung;

Figur 3    eine Tabelle mit durch ein Klassifizierungsverfahren erzeugten Klassifizierungsverteilungen;

Figur 4    Eine Tabelle mit optimierten Klassifizierungsverteilungen gemäß einer Variante der Erfindung.

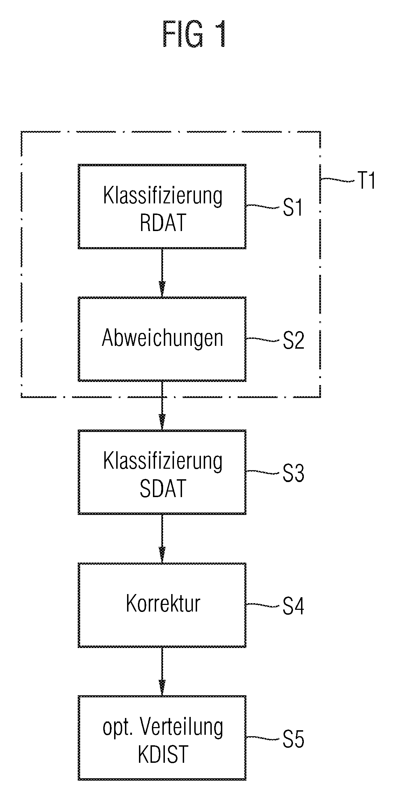

Figur 1 zeigt eine grundsätzliche Abfolge von Verfahrensschritten, wie sie bei einer Variante eines Verfahrens zum Klassifizieren von Daten auftreten können. Es ist vorgesehen, in einem mit T1 bezeichneten Trainingsschritt zunächst die Eigenschaften des verwendeten Klassifizierungsverfahrens zu prüfen. Dies umfasst die Anwendung eines an sich bekannten Klassifizierungsverfahrens auf Referenzdaten, sowie eine Fehlerbestimmung von tatsächlichen Klassenzugehörigkeiten der Referenzdaten und die Zuordnung durch das Klassifizierungsverfahren.

Referenzdaten RDAT können beispielsweise kommerziell erhältliche Datenbanken mit Sprachdaten unterschiedlicher Sprecher umfassen. Dabei sind die jeweiligen Eigenschaften der Sprecher, welche die jeweiligen Äußerungen oder Sprachaufnahmen erzeugt haben, bekannt. Es ist zum Beispiel häufig gewünscht, die erhaltenen Anrufe bzw. Anrufer in Klassen einzuordnen, die vom Alter und Geschlecht des Anrufers abhängen. Zum Beispiel kommt eine Klassifizierung in eine erste Kinderklasse CH für Anrufer mit einem Alter von beispielsweise weniger als 14 Jahren in Fragen. Eine zweite Klasse YN kann junge Erwachsene männlichen Geschlechts in einem Alter zwischen 14 und 20 Jahren umfassen. Eine dritte Gruppe könnte entsprechende junge weibliche Erwachsene YF aufweisen. Als vierte Gruppe oder Klasse werden zum Beispiel männliche Erwachsene AM in einem Alter zwischen 20 und 65 erfasst, und als fünfte Gruppe analog weibliche Erwachsene AF. Außerdem kann eine sechste Gruppe männliche Senioren SM in einem Alter von über 65 und eine siebte Gruppe entsprechende weiblicher Senioren SF umfassen.

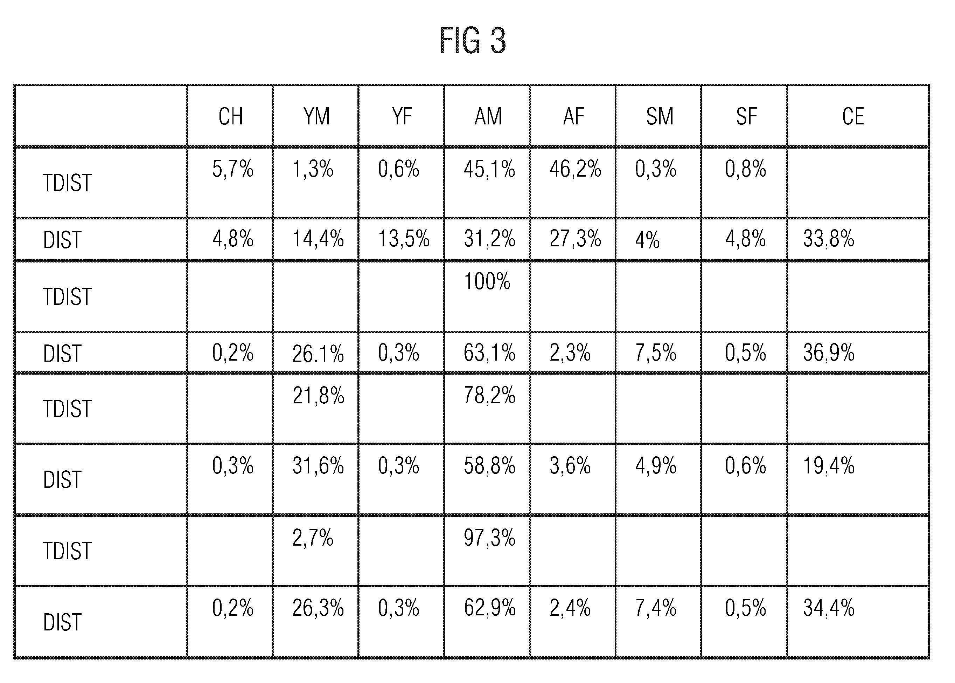

Für die im Trainingsschritt T1 zu klassifzierenden Referenzdaten RDAT sind die jeweiligen Klassenzugehörigkeiten bekannt. In einem ersten Unterschritt S1 erfolgt damit eine Klassifizierung mit Hilfe des Klassifizierungsverfahrens oder eines entsprechenden Klassifikators, der beispielsweise ein Computerprogramm sein kann. Dadurch ergibt sich eine Klassenverteilung, wie sie beispielsweise in der Figur 3 mit DIST in jeder zweiten Zeile der tatsächlichen Klassenzugehörigkeit TDIST gegenübergestellt ist. Die in den jeweiligen Spalten angegebenen Prozentzahlen entsprechen den relativen Anteilen der klassifizierten Referenzdatenproben auf die Klassen CH, YM, YF, AM, AF, SM, SF.

In einem zweiten Trainingsschritt S2 werden nun die Abweichungen, zum Beispiel die Differenzen zwischen dem relativen Anteil der tatsächlichen Zuordnung und dem relativen Anteil der durch das Klassifizierungsverfahren vorgenommenen Zuordnung der Referenzdaten, ermittelt. Beispielsweise ergibt sich in der den männlichen Senioren SM zugehörigen Spalte eine Abweichung zwischen der tatsächlichen Klassenzugehörigkeit TDIST von 0,3% und der durch das Klassifizierungsverfahren vorgenommenen Zugehörigkeit DIST von 4% eine Abweichung von 3,7%. Insgesamt kann auch ein Maß für die Klassifizierungsungenauigkeit oder das Klassifizierungsfehler CE berechnet werden, der im Wesentlichen die Hälfte der Summe der jeweiligen Abweichungen in den prozentualen Anteilen entsprechen. Dies ist weiter unten näher erläutert.

Im Folgeschritt S3 werden nun vorhandene Datenproben, wie beispielsweise Anrufer bzw. aufgezeichnete Sprachdaten eines jeweiligen Anrufers, mittels dem bekannten Klassifizierungsverfahren klassifiziert. Die zu klassifizierenden Daten sind mit SDAT bezeichnet und umfassen eine vorgegebene Anzahl von Datenproben. Eine Datenprobe entspricht dabei zum Beispiel einem Anruf. Im Ergebnis wird somit eine Klassifizierungsverteilung DIST bestimmt. Da, wie bereits anhand der Figur 3 erläutert wurde, das Klassifizierungsverfahren zwangsläufig nicht alle Datenproben korrekt zuordnen kann, erfolgt im Schritt S4 eine Korrektur dieser (vorläufigen) Klassifizierungsverteilung DIST.

Der Fehler, welcher durch das Klassifizierungsverfahren hervorgerufen ist, hängt dabei auch von der Verteilung der jeweiligen Anrufer ab. Wiederum in der Figur 3 ist dies in den drei unteren Zeilenpaaren illustriert. Das bei der Erstellung der Tabelle der Figur 3 erläuterte Klassifizierungsverfahren vertauscht, zum Beispiel in etwa systematisch, Datenproben, die männlichen Erwachsenen AM entsprechen, mit Datenproben, die jüngeren Erwachsenen YM entsprechen. In Kenntnis dieser Tendenz des Klassifizierungsverfahrens diese beiden Klassen AM, YM miteinander zu vertauschen, bzw. eine Fehlzuordnung von AM auf YM vorzunehmen, kann nun eine Korrektur der erhaltenen Verteilung erfolgen. Im Ergebnis liefert das Verfahren im Schritt S5 dann eine optimierte Verteilung die der tatsächlichen Verteilung eher entspricht.

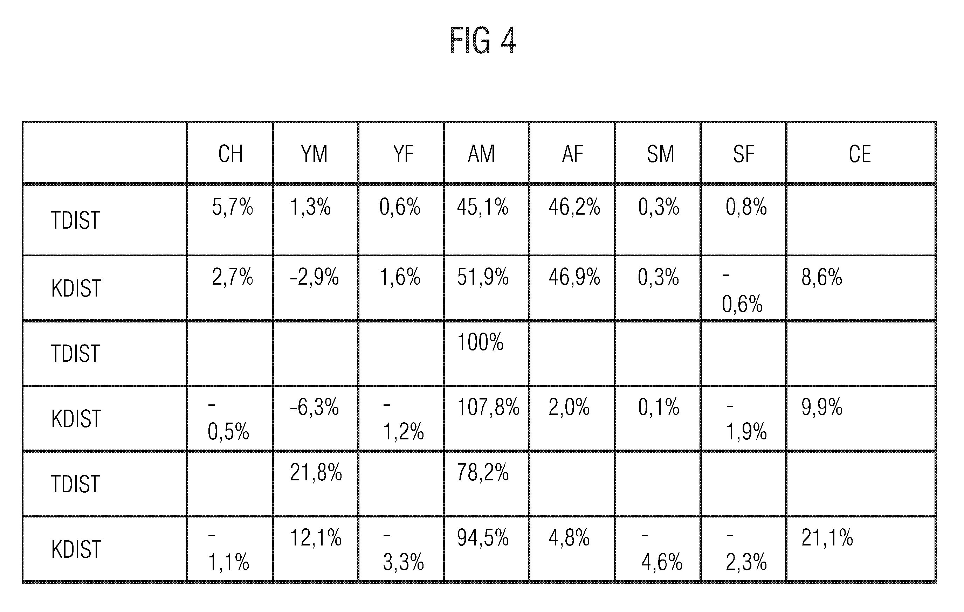

Dies ist zum Beispiel in der Tabelle der Figur 4 ersichtlich, in der mittels einer entsprechenden Korrektur in Abhängigkeit von den zunächst ermittelten Abweichungen zwischen tatsächlicher Klassenzugehörigkeit und durch den Klassifikator erfolgten Klassenzuordnung der vorläufigen Verteilung DIST zu einer korrigierten Klassenverteilung dargestellt ist. Die korrigierten Verteilungen sind mit KDIST bezeichnet. Dabei entspricht die tatsächliche Verteilungen TDIST, denen die der Tabelle der Figur 3 zugrunde gelegt wurden.

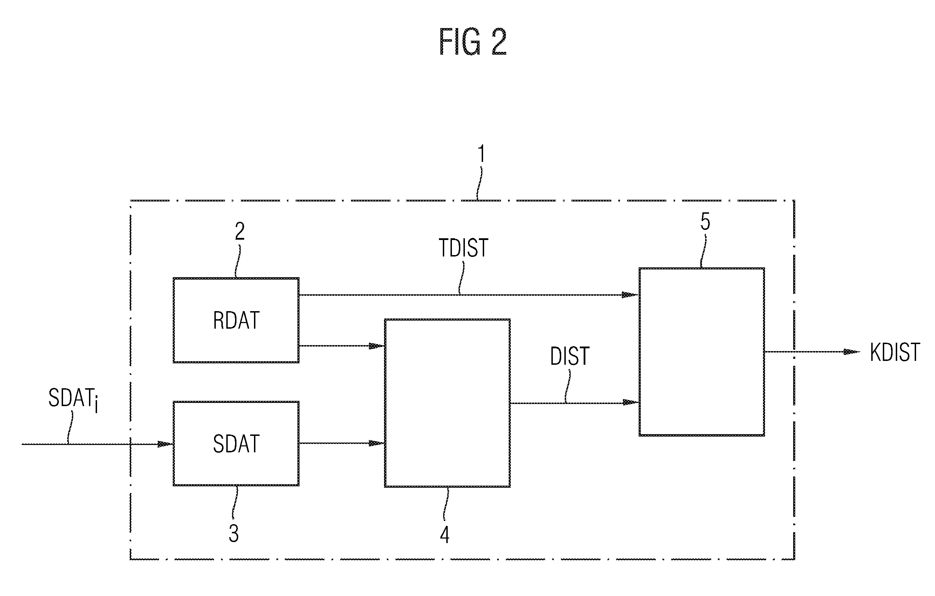

Das in der Figur 1 beispielhaft dargestellte Verfahren kann zum Beispiel in einer Klassifizierungsvorrichtung, wie sie in der Figur 2 ist, durchgeführt werden. Dazu ist in der Figur 2 ein Blockdiagramm einer Vorrichtung, die beispielsweise Computer implementiert auf einem PC ablaufen kann, dargestellt.

Die Vorrichtung 1 zum Klassifizieren von Daten weist dabei insbesondere eine Steuereinheit 5 auf, die die Auswertung und Korrektur von durch einen Klassifikator 4 erzeugten Verteilungen DIST übernimmt. Die Vorrichtung 1 ist mit einem optionalen Speicher 2 für Referenzdaten RDAT ausgestattet und weist einen Klassifizierungsdatenspeicher 3 zum Zwischenspeichern der zu klassifizierenden Daten SDAT auf. Zum Beispiel können Datenproben SDATi der Klassifizierungsvorrichtung 1 zugespielt werden und in dem Klassifizierungsspeicher 3 zwischengespeichert werden. Die Steuereinheit 5 koordiniert dabei zum Beispiel die Durchführung der in der Figur 1 schematisch angedeuteten Verfahrensschritte.

Das heißt zunächst werden die Referenzdaten RDAT durch den Klassifikator 4 klassifiziert, wodurch die Klassifizierungs-oder Steuereinheit 5 eine Verteilung erstellt. Diese kann mit der tatsächlichen Verteilung TDIST in Kenntnis der im Referenzdatenspeicher 2 abgespeicherten Referenzdaten verglichen werden. Schließlich erzeugt die Klassifikatoreinheit 4 auch von den zu klassifizierenden Daten SDAT eine Verteilung DIST. Durch Anwendung der Korrekturen gemäß einem im Folgenden beispielhaften näher erläuterten Verfahren ergibt sich eine korrigierte oder optimierte Verteilung KDIST. Im Weiteren sei eine beispielhafte Vorgehensweise zum Berechnen der korrigierten Verteilung KDIST näher erläutert.

Die Fehler des Klassifikators bzw. des verwendeten Klassifizierungsverfahrens schlägt sich im Wesentlichen in Vertauschungen zwischen den Klassen nieder. Diese Vertauschungen zwischen korrekt und fehlerhaft zugeordneten Datenproben auf die vorgegebenen Klassen sind auf genügend großen Anrufermengen ähnlich groß. Diese Fehler können als eine lineare Abbildung von der tatsächlichen Verteilung, wie sie zum Beispiel in der ersten Zeile der Tabelle in Figur 3 aufgeführt ist, zu der beobachteten Verteilung verstanden werden. Die beobachtete, bzw. mittels dem zugrunde gelegten Klassifizierungsverfahren erhaltene, Verteilung DIST ist jeweils in der zweiten Zeile in der Tabelle angegeben. In der letzten Spalte CE ist eine Maß für einen Klassifizierungsfehler angegeben. Beispielhaft kann dieser als

$$CE = \sum_{Klassen} |\text{tatsächlicher Anteil - zugeordneter Anteil}|/2$$

berechnet werden.

Diese Abbildung kann mittels einer Trainingsmenge, bzw. Referenzdatenproben, mit bekannten Klassenzugehörigkeiten ermittelt werden, und für die Korrektur der inhärent fehlerbehafteten Klassifizierungsverteilung DIST invertiert werden.

Mathematisch kann diese Vorgehensweise wie folgt beschrieben werden. $\Omega$ wird als die Menge aller möglichen Anrufe bzw. Datenproben oder Referenzdatenproben aufgefasst. Die Abbildung X: $\Omega \rightarrow \{1,..., n\}$ ist die Zufallsvariable der tatsächlichen Klassenzugehörigkeit, wobei n Klassen angenommen werden. Im Beispielsfalls der Anruferklassifizierung sind n = 7, nämlich CH, YM, YF, AM, AF, SM, SF vorgesehen. Y: $\Omega \rightarrow \{1,..., n\}$ stellt die Zufallsvariable dar, welche den Klassifikationsergebnissen durch das Klassifizierungsverfahren entspricht. Für einen idealen Klassifikator gilt dabei X = Y.

A $\subset \Omega$ sei nun eine endliche Teilmenge von Anrufen, die untersucht wird. X': A $\rightarrow \{1,..., n\}$ und Y': A $\rightarrow \{1,..., n\}$ sind dann die Einschränkungen von X und Y auf A. Somit sind X' die Klassenzugehörigkeiten der Anrufer, also die Referenzverteilung oder Klassenzugehörigkeiten der Referenzdatenproben, und Y' sind die Klassifikationsergebnisse, welche von einem vorgegebenen Verfahren geliefert werden.

Gesucht sind jetzt die Verteilungen der Klassenzugehörigkeiten p(X'=i), wobei die Verteilungen der Klassifikationsergebnisse p(Y'=i) bekannt sind. Es wird davon ausgegangen, dass auf genügend großen Anrufermengen die Vertauschungen zwischen Klassen in der Regel gleich sind, d.h. es existieren Konstanten $C_{i,j}$, sodass für fast alle A näherungsweise gilt:

$$p(Y'=i \,|\, X'=j) \approx c_{i,j}.$$

Die $_{Ci,j}$ können zum Beispiel als Matrixdarstellung einer linearen Abbildung verstanden werden. Auf einem Developmentset aus einer vorgegebenen Anzahl von bekannten Referenzdatenproben mit bekanntem X' können die $c_{i,j}$, aus den relativen Häufigkeiten für die Klassen geschätzt werden. Die Lösung dieses Invertierungsproblems kann mittels einem Gleichungssystem unter Verwendung der bedingten Wahrscheinlichkeit erfolgen:

$$p(Y'=j) = \sum_{i=1\ldots n} p(Y'=j, X'=i) = \sum_{i=1\ldots n} p(Y'=j \,|\, X'=i) = \sum_{i=1\ldots n} c_{i,j} \, p(X'=i).$$

Somit erhält man eine Korrekturabbildung $c_{i,j}$ mittels derer die Klassifizierungsverteilung DIST optimiert werden kann, um eine zuverlässigere Verteilung auf Klassen zu erzielen.

Die $c_{i,j}$ können somit auf einem entsprechenden Developmentset mit bekannten Klassenzugehörigkeiten bestimmt werden, indem die relativen Häufigkeiten bzw. Anteile der jeweiligen fehlerhaften Zuordnungen durch das Klassifizierungsverfahren gezählt werden. Anschließend wird die sich ergebende Matrix der $c_{i,j}$ invertiert. Zur Ermittlung der Klassenverteilungen $p(X'=i)$ wird der entsprechende Vektor der durchschnittlichen Klassifikationsergebnisse $p(Y'=i)$ zum Korrigieren der erhaltenen (suboptimalen) Verteilung mit dieser inversen Matrix multipliziert. Durch diese Multiplikation können prinzipiell auch Werte auftreten, die größer 100% und kleiner 0% sind, wie in der Figur 4 ersichtlich ist. Diese werden zum Beispiel abgeschnitten, und anschließend wird das Ergebnis auf 100% normiert.

In der Figur 4 sind zum Beispiel entsprechende korrigierte Klassifizierungsverteilungen KDIST in tabellarischer Form analog der Tabelle aus Figur 3 angegeben. Man kann dabei durch die Vorgehensweise zum Korrigieren der Verteilung eine erhebliche Verbesserung der Klassifikatorperformance und Klassifikatorzuverlässigkeit erreichen, wie man aus der Tabelle erkennt.

Im Folgenden ist eine weitere Variante des Verfahrens zum Klassifizieren von Daten, bzw. zum Korrigieren von durch ein bekanntes Klassifizierungsverfahren erhaltenen Klassifizierungsverteilungen erläutert. Im Wesentlichen basiert diese Variante auf der mathematischen Beschreibung wie zuvor.

Einige Klassifikatoren liefern neben der wahrscheinlichsten Klassenzugehörigkeit einer Datenprobe ferner auch eine Konfidenz, die beschreibt, wie sicher sich der Klassifikator bei dem Zuordnungsergebnis ist. Es wird angenommen, dass je geringer der Konfidenzwert im Mittel ausfällt, desto wahrscheinlicher Zuordnungsfehler aufgetreten sind.

Die Konfidenz oder Zuordnungssicherheit wird als weitere Zufallsvariable $F: \Omega \rightarrow R^m$, beschrieben, die jedem Anruf bzw. Daten- oder Referenzdatenprobe, einen m-dimensionalen Merkmalsvektor zuordnet. Bekannt sind daher nicht nur die $p(Y'=i)$, sondern auch alle sogenannten a-posteriori Wahrscheinlichkeiten oder Konfidenzen $p(X=i|F=f)$ bei einem gegebenem Merkmalsvektor f. Gesucht ist nach wie vor die Vertauschungsmatrix $p(Y'=i|X'=j)$, welche nun für jedes A berechnet wird.

Die Vertauschungswahrscheinlichkeit kann als genauso hoch angenommen werden wie die a-posteriori Wahrscheinlichkeit für ein falsches Klassifikationsergebnis. Somit gilt für ausreichend große A, dass die Vertauschungsverteilung auf A ungefähr so groß ist wie die durchschnittliche a-posteriori Wahrscheinlichkeit, dass der Klassifikator falsche Ergebnissen zuordnet. Dies kann anschaulich ausgedrückt werden als:

$$p(Y'=j \,|\, X'=i) \approx p(X=j \,|\, F=f_{X',i}),$$

wobei $f_{x',i}$ diejenigen Merkmalsvektoren sind, die den Anrufern bzw. Datenproben aus der Klasse i zugeordnet werden. Da die Klassenzugehörigkeit X' a-priori nicht bekannt ist, sondern nur die Klassifikationsergebnisse Y' vorliegen, sind nur die $p(X=j|F=f_{x',i})$ bekannt. Man kann jedoch Annahmen über die Verteilung der a-posteriori Wahrscheinlichkeiten vornehmen, sodass die $p(X=j|F=f_{x',i})$ abgeschätzt werden können.

Dies sei an einem 2-Klassenzuordnungsproblem mit symmetrischen Vertauschungen beispielhaft verdeutlichet. Man kann dann zum Beispiel zeigen, dass für $i \neq j$:

$$P(Y'=j \,|\, X'=i) \approx 0,5 \, [p(X=1 \,|\, F=f_{Y',2}) + p(X=2 \,|\, F=f_{Y',1})$$

und für $i = j$ :

$$P(Y'=i \,|\, X'=i) \approx 0,5 \, [p(X=1 \,|\, F=f_{Y',1}) + p(X=2 \,|\, F=f_{Y',2})]$$

gilt. Diese Abschätzung für $c_{i,j}$ liefert ebenfalls weiter verbesserte Korrekturen für die Verteilungen auf die Klassen in der jeweiligen Klassifizierungsverteilung.

Obwohl die vorliegende Erfindung anhand bevorzugter Ausführungsbeispiele näher erläutert wurde, ist sie nicht darauf beschränkt sondern vielfältig modifizierbar. Insbesondere bei der Wahl der zugrunde gelegten Klassifizierungsverfahren kann dem Anwender freie Hand gelassen werden. Die genannten Klassen in Geschlechts-Altergruppen sind ebenfalls lediglich beispielhaft zu verstehen. Die erfindungsgemäße Klassifikation von Daten bzw. Datenproben lässt sich zumindest immer dann günstig einsetzen, wenn Referenz- oder Trainingsdaten erhältlich sind und Abweichungen von korrekten Zuordnungen durch das Klassifizierungsverfahren ermittelt werden können.

**Patentansprüche**

1. Verfahren zum Klassifizieren von Daten (SDAT), insbesondere von Sprachdaten, in vorgegebene Klassen (CH, YM, YF, AM, AF, SM, SF), wobei in Abhängigkeit von Abweichungen (CE) zwischen tatsächlichen Klassenzugehörigkeiten (X) von Referenzdaten (RDAT) und einer Klassenzuordnung (Y) der Referenzdaten (RDAT), welche durch ein vorgegebenes Klassifizierungsverfahren erfolgt, für zu klassifizierende Daten (SDAT) eine mittels dem Klassifizierungsverfahren erzeugte Klassifizierungsverteilung (DIST) der zu klassifizierenden Daten (SDAT) auf die vorgegebenen Klassen (CH, YM, YF, AM, AF, SM, SF) zum Erzeugen einer optimierte Klassifizierungsverteilung (KDIST) korrigiert wird.

2. Verfahren nach Anspruch 1, wobei
eine Abbildung der tatsächlichen Klassenzugehörigkeiten auf die Klassenzuordnung der Referenzdaten, welche durch das vorgegebene Klassifizierungsverfahren erfolgt, als eine lineare Abbildung angenähert wird, und eine zugehörige inverse Abbildung zum Erzeugen der optimierten Klassifizierungsverteilung (KDIST) auf die für die zu klassifizierende Daten (SDAT) eine mittels dem Klassifizierungsverfahren erzeugte Klassifizierungsverteilung (DIST) angewendet wird.

3. Verfahren nach Anspruch 1 oder 2, wobei
das Korrigieren der von dem vorgegebenen Klassifizierungsverfahren erzeugten Klassifizierungsverteilung (DIST) der zu klassifizierenden Daten (SDAT) in Abhängigkeit von ermittelten Häufigkeiten von Vertauschungen zwischen tatsächlichen Klassenzugehörigkeiten der Referenzdaten (RDAT) und durch das vorgegebene Klassifizierungsverfahren erfolgte Klassenzuordnung der Referenzdaten (RDAT) erfolgt.

4. Verfahren nach einem der Ansprüche 1 - 3, wobei
die folgenden Verfahrensschritte durchgeführt werden:

- Zuordnen (S1) von Referenzdatenproben aus Referenzdaten in vorgegebene Klassen mittels einem vorgegebenen Klassifizierungsverfahren, wobei jede Referenzdatenprobe einer vorgegebenen Klasse zugehörig ist;
- Bestimmen (S2) einer Abweichung der Anzahl einer jeweiligen vorgegebenen Klasse zugeordneten Referenzdatenproben von der Anzahl der der Klasse zugehörigen Referenzdatenproben für jede der vorgegebene Klassen;
- Zuordnen (S3) von Datenproben aus zu klassifizierenden Daten in die vorgegebenen Klassen mittels dem vorgegebenen Klassifizierungsverfahren zum Erzeugen einer Klassifizierungsverteilung (DIST); und
- Korrigieren (D5) der Klassifizierungsverteilung in Abhängigkeit von den bestimmten Abweichungen zum Erzeugen einer optimierten Klassifizierungsverteilung (KDIST).

5. Verfahren nach Anspruch 4, wobei
die Abweichung für eine Klasse als Differenz zwischen einem relativen Anteil der der Klasse zugehörigen Referenzdatenproben an der Gesamtzahl der Referenzdatenproben und einem relativen Anteil der der Klasse durch das vorgegebene Klassifizierungsverfahren zugeordneten Referenzdatenproben an der Gesamtzahl der zu klassifizierenden Referenzdatenproben ermittelt wird.

6. Verfahren nach Anspruch 4 oder 5, wobei
das vorgegebene Klassifizierungsverfahren einen Konfidenzwert für eine Zuordnung einer Datenprobe oder einer Referenzdatenprobe zu einer der vorgegebenen Klasse liefert und die von dem Klassifizierungsverfahren erzeugte Klassifizierungsverteilung ferner in Abhängigkeit von den Konfidenzwerten korrigiert wird.

7. Verfahren nach einem der Ansprüche 1 - 6, wobei
die zu klassifizierenden Daten (SDAT) Sprachproben von Anrufern sind.

**8.** Verfahren nach einem der Ansprüche 1 - 6, wobei
die vorgegebenen Klassen Anrufe von Kindern (CH), jungen männlichen Erwachsenen (YM), jungen weiblichen Erwachsenen (YF), männlichen Erwachsenen (AM), weiblichen Erwachsenen (AF), männlichen Senioren (SM) und/ oder weiblichen Senioren (SF) umfassen.

**9.** Klassifizierungsvorrichtung (1) zur Klassifizierung von Daten, welche derart eingerichtet ist, dass ein Verfahren nach einem der Ansprüche 1 - 8 durchgeführt wird.

**10.** Klassifizierungsvorrichtung (1) nach Anspruch 9, wobei die Klassifizierungsvorrichtung (1) eine Klassifikationseinheit (4) zur Durchführung eines vorgegebenen Klassifizierungsverfahrens aufweist.

**11.** Klassifizierungsvorrichtung (1) nach Anspruch 9 oder 10, wobei
ein Referenzdatenspeicher (2) und/oder ein Klassifizierungsdatenspeicher (3) vorgesehen ist.

**12.** Klassifizierungsvorrichtung (1) nach einem der Ansprüche 9 - 11, wobei
eine programmierbare Steuereinheit (5) vorgesehen ist, welche derart programmiert ist, dass ein Verfahren nach einem der Ansprüche 1 - 8 durchgeführt wird.

**13.** Computerprogrammprodukt, welches die Durchführung eines Verfahrens nach einem der Ansprüche 1 - 8 auf einer programmgesteuerten Rechnereinrichtung veranlasst.

# FIG 1

```
┌ ─ ─ ─ ─ ─ ─ ─ ─ ─ ─ ─ ─ ─ ─ ┐
│   ┌──────────────────┐       │          ╭─ T1
│   │  Klassifizierung │ ─ S1  │
│   │      RDAT        │       │
│   └──────────────────┘       │
│            │                 │
│            ▼                 │
│   ┌──────────────────┐       │
│   │   Abweichungen   │ ─ S2  │
│   └──────────────────┘       │
└ ─ ─ ─ ─ ─ ─ │ ─ ─ ─ ─ ─ ─ ─ ┘
              ▼
     ┌──────────────────┐
     │  Klassifizierung │ ─ S3
     │      SDAT        │
     └──────────────────┘
              │
              ▼
     ┌──────────────────┐
     │     Korrektur    │ ─ S4
     └──────────────────┘
              │
              ▼
     ┌──────────────────┐
     │  opt. Verteilung │ ─ S5
     │      KDIST       │
     └──────────────────┘
```

## FIG 2

EP 2 037 448 A1

FIG 3

|        | CH   | YM    | YF    | AM    | AF    | SM   | SF   | CE    |
|--------|------|-------|-------|-------|-------|------|------|-------|
| TDIST  | 5,7% | 1,3%  | 0,6%  | 45,1% | 46,2% | 0,3% | 0,8% |       |
| DIST   | 4,8% | 14,4% | 13,5% | 31,2% | 27,3% | 4%   | 4,8% | 33,8% |
| TDIST  |      |       |       | 100%  |       |      |      |       |
| DIST   | 0,2% | 26.1% | 0,3%  | 63,1% | 2,3%  | 7,5% | 0,5% | 36,9% |
| TDIST  |      | 21,8% |       | 78,2% |       |      |      |       |
| DIST   | 0,3% | 31,6% | 0,3%  | 58,8% | 3,6%  | 4,9% | 0,6% | 19,4% |
| TDIST  |      | 2,7%  |       | 97,3% |       |      |      |       |
| DIST   | 0,2% | 26,3% | 0,3%  | 62,9% | 2,4%  | 7,4% | 0,5% | 34,4% |

EP 2 037 448 A1

## FIG 4

| | CH | YM | YF | AM | AF | SM | SF | CE |
|---|---|---|---|---|---|---|---|---|
| TDIST | 5,7% | 1,3% | 0,6% | 45,1% | 46,2% | 0,3% | 0,8% | |
| KDIST | 2,7% | -2,9% | 1,6% | 51,9% | 46,9% | 0,3% | -0,6% | 8,6% |
| TDIST | | | | 100% | | | | |
| KDIST | -0,5% | -6,3% | -1,2% | 107,8% | 2,0% | 0,1% | -1,9% | 9,9% |
| TDIST | | 21,8% | | 78,2% | | | | |
| KDIST | -1,1% | 12,1% | -3,3% | 94,5% | 4,8% | -4,6% | -2,3% | 21,1% |

EP 2 037 448 A1

Europäisches
Patentamt

European
Patent Office

Office européen
des brevets

# EUROPÄISCHER RECHERCHENBERICHT

**Nummer der Anmeldung**

EP 08 10 5150

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | METZE F ET AL: "Comparison of four approaches to age and gender recognition for telephone applications" ICASSP, IEEE INTERNATIONAL CONFERENCE ON ACOUSTICS, SPEECH AND SIGNAL PROCESSING - PROCEEDINGS - 2007 IEEE INTERNATIONAL CONFERENCE ON ACOUSTICS, SPEECH AND SIGNAL PROCESSING, ICASSP '07 2007 INSTITUTE OF ELECTRICAL AND ELECTRONICS ENGINEERS INC. US, Bd. 4, April 2007 (2007-04), Seiten IV1089-IV1092, XP002503839 * Zusammenfassung * * Seite 1098, Absatz [1. Introduction] * * Seite 1090, linke Spalte, Absatz 2 - rechte Spalte, Absatz 1 * * Abbildung 1 * ----- | 1-13 | INV. G10L15/08 G10L15/26 |
| A | US 2004/111453 A1 (HARRIS CHRISTOPHER K [US] ET AL) 10. Juni 2004 (2004-06-10) * Zusammenfassung * * Seite 2, Absätze [0022]- [0024] * * Abbildung 1 * ----- | 1,9,13 | |
| A | DIETTERICH T G ET AL: "SOLVING MULTICLASS LEARNING PROBLEMS VIA ERROR-CORRECTING OUTPUT CODES" JOURNAL OF ARTIFICIAL INTELLIGENCE RESEARCH, MORGAN KAUFMAN PUBLISHERS, SAN FRANCISCO, CA, US, Bd. 2, 1. Juli 1994 (1994-07-01), Seiten 263-286, XP001086440 ISSN: 1076-9757 * Zusammenfassung * ----- | 1,9,13 | |

**RECHERCHIERTE SACHGEBIETE (IPC)**

G10L

Der vorliegende Recherchenbericht wurde für alle Patentansprüche erstellt

| Recherchenort | Abschlußdatum der Recherche | Prüfer |
|---|---|---|
| München | 13. November 2008 | Greiser, Norbert |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 08 10 5150

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-11-2008

| Im Recherchenbericht angeführtes Patentdokument | Datum der Veröffentlichung | Mitglied(er) der Patentfamilie | Datum der Veröffentlichung |
|---|---|---|---|
| US 2004111453 A1 | 10-06-2004 | AU 2003291738 A1<br>EP 1576440 A2<br>JP 2006511000 T<br>WO 2004053630 A2<br>US 2008183646 A1 | 30-06-2004<br>21-09-2005<br>30-03-2006<br>24-06-2004<br>31-07-2008 |

EPO FORM P0461

Für nähere Einzelheiten zu diesem Anhang : siehe Amtsblatt des Europäischen Patentamts, Nr.12/82